## Europäisches Patentamt
## European Patent Office
## Office européen des brevets

(19)

(11) Numéro de publication: **0 085 947**
B1

(12)

# FASCICULE DE BREVET EUROPEEN

(45) Date de publication du fascicule du brevet:
25.09.85

(51) Int. Cl.⁴: **H 02 J 7/00,** H 02 J 1/00,
G 05 F 1/00

(21) Numéro de dépôt: **83101000.4**

(22) Date de dépôt: **03.02.83**

(54) Régulateur de charge d'une batterie.

(30) Priorité: **09.02.82 FR 8202065**

(43) Date de publication de la demande:
**17.08.83 Bulletin 83/33**

(45) Mention de la délivrance du brevet:
**25.09.85 Bulletin 85/39**

(84) Etats contractants désignés:
**BE DE FR GB IT**

(56) Documents cités:
**FR - A - 2 240 148
FR - A - 2 326 735
US - A - 2 572 210
US - A - 3 480 789
US - A - 3 487 229**

**IEEE 1980 IECI PROCEEDINGS, 17-20 mars 1980, pages 210-216, "Applications of Mini and Microcomputers", Sheraton Hotel, Philadelphia, Pennsylvania (US); C.H. MUCH et al.: "Microprocessor-based control of the photovoltaic solar power system for an AM radio station".**

(73) Titulaire: **PHOTOWATT INTERNATIONAL S.A., 125, rue du Président Wilson, F-92302 Levallois-Perret (FR)**

(72) Inventeur: **Gouel, Patrick, 7, Chemin des Chevaux Rû, F-78400 Chatou (FR)**

(74) Mandataire: **Weinmiller, Jürgen et al, Zeppelinstrasse 63, D-8000 München 80 (DE)**

ACTORUM AG

## Description

L'invention concerne un régulateur de charge d'une batterie. Lorsqu'une batterie est alimentée par un ensemble de panneaux solaires, la puissance délivrée est variable et aléatoire, puisque fonction de l'ensoleillement. Le courant délivré par un tel ensemble de panneaux solaires est donc variable et compte tenu de l'état de charge de la batterie il est nécessaire de régler le courant de charge de la batterie.

On connaît déjà des régulateurs de charge d'une batterie à partir d'un ensemble de panneaux solaires, les panneaux solaires étant branchés en parallèle, et comportant chacun un grand nombre de cellules photovoltaïques; un comparateur compare une fraction de la tension de la batterie à une tension de référence et sert à la commande de la charge de la batterie.

Dans une solution connue un ensemble résistance-transistor en série est branché en parallèle sur la batterie. Le transistor est commandé par le comparateur. Lorsque la tension de la batterie est inférieure à la tension de référence, le transistor est bloqué et la totalité du courant fourni par les panneaux solaires sert à charger la batterie. Lorsque la tension batterie est supérieure à la tension de référence, le transistor devient passant et tout ou partie du courant est dérivé dans l'ensemble résistance transistor. Cette solution présente une très grande efficacité et permet le régime de «floating». Son principal inconvénient, notamment dans les montages de forte puissance, est de nécessiter des ensembles résistances et transistors capables de dissiper la puissance maximale, c'est-à-dire la puissance crête de l'ensemble des panneaux solaires, soit plusieurs kilowatts ou même dizaines de kilowatts dans le cas de très grandes installations. Du fait de la puissance à dissiper, les ensembles résistances et transistors ne peuvent être montés dans des montages étanches les protégeant des poussières ou du sable, et leurs performances s'en trouvent affectées.

— Une autre solution connue consiste à interrompre le courant délivré par l'ensemble des panneaux solaires en parallèle, à l'aide d'un relais dont le contact est en série dans la liaison panneaux solaires batterie, le relais étant commandé par le comparateur. Lorsque la tension batterie est inférieure à la tension de référence, le contact du relais est fermé et le courant délivré par l'ensemble des panneaux solaires charge la batterie. Lorsque la tension batterie est supérieure à la tension de référence, le contact du relais est ouvert et le courant est interrompu. Dans cette solution le comparateur doit être un comparateur à hystérésis, c'est-à-dire ayant un seuil pour la fermeture du contact et un autre seuil pour l'ouverture du contact; en effet lors de l'ouverture du contact du relais la tension de la batterie diminue et, s'il n'y avait qu'un seuil, le relais serait alimenté dès l'ouverture du contact, ce qui fermerait à nouveau le contact, et il y aurait oscillation. Dans cette solution il n'y a plus de puissance à dissiper, mais il devient impossible de réaliser une charge complète de la batterie car il y aurait alors consommation d'eau, le courant en fin de charge ne pouvant être réduit. Si donc on arrête la charge à un niveau de l'ordre 2,3 à 2,35 volts par élément d'accumulateur on ne peut atteindre au mieux qu'environ 80% de la capacité utile de la batterie. Cette solution conduit donc à un surdimensionnement de la batterie d'au moins 20% par rapport à la puissance désirée. Il est possible dans cette solution d'enfermer le relais et son contact dans un montage étanche comprenant l'appareillage et notamment le comparateur.

La présente invention a pour but de combiner les avantages des deux solutions décrites ci-dessus sans en retrouver les inconvénients.

L'invention a pour objet un régulateur de charge d'une batterie chargée par des sources identiques de puissance variable, comportant un convertisseur continu-continu alimenté par la batterie, un module comparateur qui compare une fraction de la tension de la batterie à une tension de référence élaborée à partir de la tension continue délivrée par le convertisseur, caractérisé par le fait qu'il comporte:

— une horloge alimentée par le convertisseur et fermant périodiquement un contact d'horloge pendant un temps court,

— un module de commande relié au convertisseur et comportant un premier dispositif de commande relié au module comparateur et commandant un premier et un deuxième moyen d'interruption, un deuxième et un troisième dispositif de commande commandés par le premier et le deuxième moyen d'interruption, respectivement, et par le contact d'horloge, un premier moyen de coupure de chacun des deuxième et troisième dispositifs de commande étant en série et reliant une polarité du convertisseur à un fil d'alimentation sortant du module de commande, un second moyen de coupure du deuxième dispositif de commande reliant ladite polarité du convertisseur à un premier fil de commande sortant du module de commande, et un deuxième moyen de coupure du troisième dispositif de commande reliant ladite polarité du convertisseur à un deuxième fil de commande sortant du module de commande, le module comparateur délivrant un signal assurant, selon son sens et par l'intermédiaire du premier dispositif de commande, la commande du deuxième ou du troisième dispositif de commande,

— des modules de connexion, un par source, reliés au fil d'alimentation, au premier et au deuxième fil de commande, et reliés directement à l'autre polarité du convertisseur, chaque fil de commande reliant les modules de connexion en série et en sens inverse, chaque module de connexion comportant un dispositif de commande commandant d'une part un moyen de coupure reliant une des sources à la batterie, un module de connexion étant en service lorsque ce moyen de coupure est fermé, et d'autre part un moyen de coupure en série avec chaque fil de commande, le dispositif de commande de chaque module de connexion étant relié directement au fil d'alimentation, la polarité du convertisseur à laquelle sont reliés, par le module de commande, les fils de commande étant transmise par le deuxième fil de commande au dispositif de commande du premier module de connexion hors service à travers tous les modules de connexion en service de rang inférieur lorsque le module comparateur détecte une tension de la batterie inférieure à la tension de référence, et par le premier fil de commande au dispositif de commande du dernier module de connexion en service à travers tous les modules de connexion hors service de rang supérieur lorsque le module comparateur détecte une tension de la batterie supérieure à la tension de référence.

L'invention sera bien comprise à l'aide de la description qui va suivre d'un exemple de réalisation illustré par les figures annexées dans lesquelles:

— la fig. 1 représente schématiquement un ensemble batterie panneaux solaires avec un régulateur de charge de l'invention,

— la fig. 2 représente de manière détaillée certains organes du régulateur de la fig. 1.

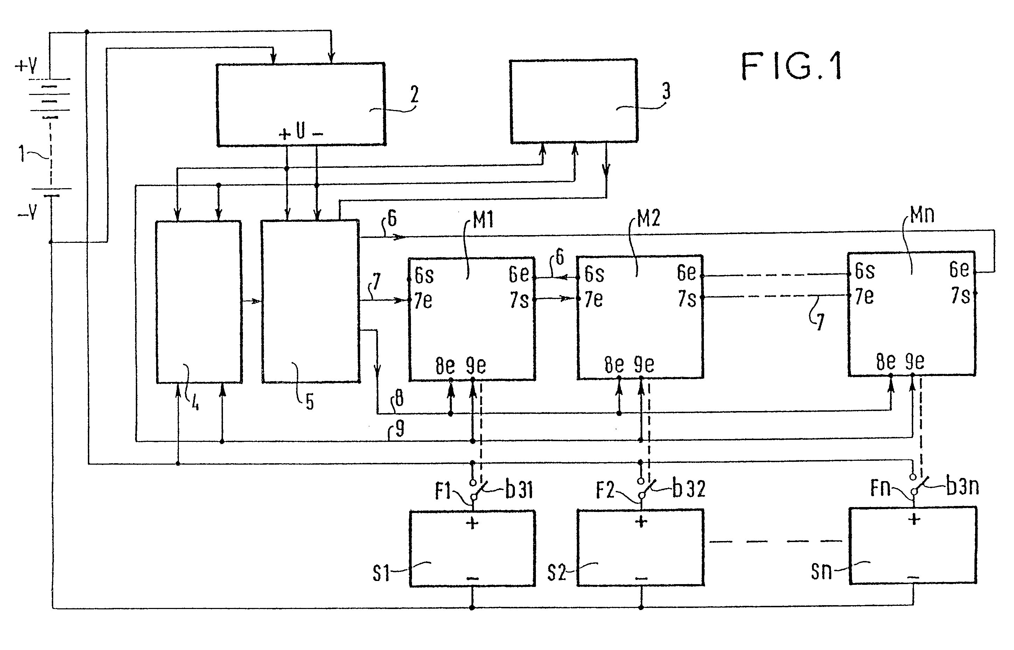

La fig. 1 est un schéma représentant une batterie 1, des panneaux solaires S1, S2, ..., Sn, et un régulateur de charge comprenant un convertisseur continu-continu 2, une horloge 3, un module comparateur 4, un module de commande 5 et des modules de connexion M1, M2, ... Mn, soit un module de connexion par panneau solaire.

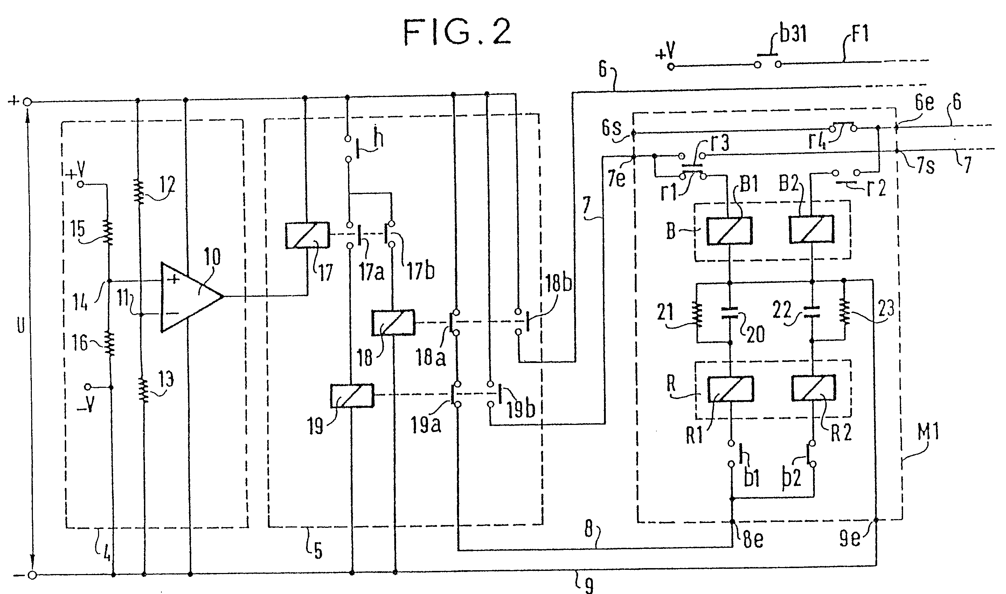

La polarité négative −V de la batterie est reliée à tous les panneaux solaires; la polarité positive +V de la batterie est reliée à chaque panneau solaire par l'intermédiaire d'un contact b31, b32, ... b3n, appartenant à un module de connexion, M1, M2, ... Mn, respectivement, comme cela sera explicité lors de la description de la fig. 2, chaque contact étant relié par un fil F1, F2, ... Fn, aux panneaux solaires, respectivement.

Le convertisseur continu-continu 2 est de tout type connu; il est relié aux polarités positive +V et négative −V de la batterie et délivre une tension U, stabilisée.

L'horloge 3 est par exemple une horloge électrique alimentée par le convertisseur continu-continu, et est reliée en sortie au module de commande 5.

Le module comparateur 4 est alimenté par le convertisseur continu-continu 2 et est relié aux polarités +V et −V de la batterie; il est relié en sortie au module de commande 5.

Le module de commande 5 est alimenté par le convertisseur continu-continu 2. Il est relié à tous les modules de connexion par un premier fil de commande 6; les modules sont reliés en série, par ce fil qui est relié tout d'abord à une entrée 6e du module de connexion Mn; une sortie 6s du module de connexion Mn est reliée à une entrée 6e du module de connexion précédent, ..., etc., la sortie 6s du module de connexion M2 étant reliée à l'entrée 6e du module de connexion M1 dont la sortie 6s n'est pas utilisée. Le module de commande 5 est relié par un deuxième fil de commande 7 à tous les modules de connexion en série, le fil 7 étant tout d'abord relié à une entrée 7e du premier module de connexion M1 dont la sortie 7s est reliée à l'entrée 7e du deuxième module de connexion M2, et ainsi de suite jusqu'au dernier module de connexion Mn dont la sortie 7s n'est pas utilisée. Le module de commande est relié par un fil d'alimentation 8 à chaque entrée 8e des modules de connexion. Chaque entrée 9e des modules de connexion est reliée par un fil 9 à la polarité négative du convertisseur continu-continu 2.

La fig. 2 représente le module comparateur 4, le module de commande 5 et le module de connexion M1; les modules de connexion étant tous identiques, il suffit d'en décrire un.

Le module comparateur 4, de type connu, comporte un comparateur 10 alimenté par le convertisseur. L'entrée négative du comparateur est reliée à un point 11 commun à deux résistances 12 et 13 en série et branchées entre les polarités positive et négative du convertisseur. L'entrée positive du comparateur est reliée à un point 14 commun à deux résistances 15 et 16 en série, branchées aux bornes de la batterie.

Dans le module de commande 5 une bobine 17 d'un relais est connectée entre la sortie du comparateur 10 et la polarité positive du convertisseur. Un contact d'horloge h, à fermeture, de l'horloge 3, fig. 1, que pour des raisons de facilité de représentation et de compréhension on a mis dans le module de commande 5, est relié d'une part à la polarité positive du convertisseur et d'autre part à deux circuits en parallèle; l'un des circuits comprend en série un contact à fermeture 17a et une bobine 19 d'un relais reliée à la polarité négative du convertisseur, l'autre circuit comprenant en série un contact à ouverture 17b et une bobine 18 d'un relais reliée à la polarité négative du convertisseur. Les contacts 17a et 17b sont commandés par la bobine 17. Deux contacts à ouverture 18a et 19a en série, sont connectés entre le fil d'alimentation 8 et la polarité positive du convertisseur. Un contact à fermeture 19b est connecté entre la polarité positive du convertisseur et le deuxième fil de commande 7.

Un contact à fermeture 18b est connecté entre la polarité positive du convertisseur et le premier fil de commande 6.

Le module de connexion M1 comprend essentiellement deux relais bistables B et R comportant chacun deux bobines B1, B2 et R1, R2 respectivement. Le relais B a trois contacts b1, b2 et b31. Le relais R a quatre contacts r1, r2, r3, r4.

Les bornes d'entrée 6e et de sortie 6s sont reliées entre elles par l'intermédiaire du contact r4. Les bornes d'entrée 7e et de sortie 7s sont reliées entre elles par l'intermédiaire du contact r3.

Les bobines B1 et R1 sont reliées en série par un circuit comprenant un condensateur 20 et une résistance 21 en parallèle; la bobine B1 est reliée par le contact r1 à la borne d'entrée 7e, la bobine R1 étant reliée à la borne d'entrée 8e par le contact b1.

Les bobines B2 et R2 sont reliées en série par un circuit comprenant un condensateur 22 et une résistance 23 en parallèle; la bobine B2 est reliée à la borne d'entrée 6e par le contact r2, la bobine R2 étant reliée à la borne d'entrée 8e par le contact b2.

Un point commun aux bobines B1 et B2, aux condensateurs 20 et 22, et aux résistances 21 et 23 est relié à la borne d'entrée 9e.

Le contact b31, déjà représenté fig. 1, est relié à la polarité positive de la batterie, et au panneau solaire S1 par le fil F1.

Les contacts 18a et 19a sont pratiquement toujours fermés, sauf pendant le temps très court où le contact d'horloge h est fermé ce qui provoque l'ouverture, pendant ce temps très court, de l'un des contacts 18a ou 19a. Pour éviter que l'une des bobines R1 ou R2, selon l'état des contacts b1, b2, ne soit toujours sous tension, donc pour réduire la consommation électrique, on alimente les bobines R1 et R2 à travers un condensateur, 20 ou 22. La résistance en parallèle sur le condensateur a pour but de décharger celui-ci entre deux cycles.

On va décrire à présent le fonctionnement du régulateur de charge représenté fig. 1 et 2.

On va supposer tout d'abord qu'aucun panneau solaire n'est relié à la batterie, donc que les contacts b31, b32, ... b3n sont ouverts, et que la tension de la batterie est inférieure à sa tension de charge; la tension de référence au point 11 relié à l'entrée négative du comparateur 10 est donc supérieure à la tension au point 14 relié à l'entrée positive du comparateur. Le contact d'horloge h de l'horloge 3 est un contact qui est fermé périodiquement pendant un temps court, de quelques centaines de millisecondes par exemple.

La tension de batterie étant inférieure à la tension de référence, qui correspond à la tension de la batterie chargée, la bobine 17 est alimentée, le contact 17a se ferme et le contact 17b s'ouvre.

Lorsque le contact h se ferme, la bobine 19 est alimentée, le contact 19a s'ouvre et le fil d'alimentation 8 n'est plus sous tension, le contact 19b se ferme, mettant le deuxième fil de commande 7 sous tension. La bobine B1 étant alimentée à travers le contact r1 le relais B bascule, ouvrant le contact b2 et fermant les contacts b1 et b31. Le panneau solaire S1 est alors relié à la batterie par le contact b31 et recharge la batterie. Lorsque le contact h s'ouvre la bobine 19 n'est plus alimentée, le contact 19a se ferme et le fil d'alimentation 8 est à nouveau sous tension, alors que le contact 19b s'ouvrant le deuxième fil de commande 7 n'est plus sous tension. La bobine R1 est alors alimentée à travers le contact b1 et le relais R bascule, ouvrant les contacts r1 et r4 et fermant les contacts r2 et r3.

Lorsque le contact d'horloge h se ferme à nouveau, et en supposant toujours que la tension de la batterie est inférieure à la tension de référence, on retrouve comme précédemment la bobine 19 alimentée, le fil d'alimentation 8 sans tension et le deuxième fil de commande 7 sous tension. Mais comme dans le module de connexion M1 le contact r1 est ouvert, la bobine B1 du relais B n'est pas alimentée; on notera d'ailleurs que le relais B étant bistable, l'alimentation de la bobine B1 ne changerait pas l'état du relais B puisque cette bobine avait été alimentée précédemment. Par contre le contact r3 étant fermé, le potentiel du deuxième fil de commande 7 est appliqué au module de connexion M2 qui par hypothèse est dans l'état ou se trouvait initialement le module de connexion M2 avant la première fermeture du contact d'horloge h, et le fonctionnement des relais B et R du module de connexion M2 est celui décrit pour le module de connexion M1; le contact b32 du relais B du module de connexion M2 est fermé et le panneau solaire S2 est relié à la batterie.

Lorsque le contact d'horloge h se ferme à nouveau, et si la tension de référence est toujours supérieure à la tension de batterie, c'est le module de connexion M3 qui sera activé, mettant ainsi le panneau solaire M3 en service par fermeture du contact b33. A chaque fermeture du contact b34, b35, ..., etc., d'un module de connexion on connecte un panneau solaire, ce qui fait croître le courant de charge de la batterie; bien entendu, lorsque le panneau solaire Sn est connecté, le courant de charge ne peut plus augmenter, sauf si le débit des panneaux solaires augmente, c'est-à-dire si l'ensoleillement augmente.

On va supposer à présent que la tension batterie est supérieure à la tension de référence, et l'on supposera qu'il y a j panneaux solaires en service.

Dans ces conditions le comparateur 10 n'alimente plus la bobine 17 et les contacts 17a et 17b sont dans l'état représenté fig. 2, contact 17a ouvert et contact 17b fermé. Lorsque le contact d'horloge h se ferme, la bobine 18 est alimentée, le contact 18a s'ouvre et le contact 18b se ferme. Le fil d'alimentation 8 n'est plus sous tension, donc aucun relais R des modules de connexion M1, M2, ..., Mj ..., Mn, n'est alimenté. Le premier fil de commande 6 est mis sous tension par le contact 18b et le potentiel de ce fil est transmis au module de connexion Mj à travers les modules de connexion Mn, Mn−1, Mn−2, ..., dont les contacts r4 sont fermés puisque par hypothèse seuls les panneaux solaires S1, S2, ..., Sj sont en service; par conséquent dans les modules de connexion M1 à Mj les contacts r1 et r4 sont ouverts et les contacts r2 et r3 sont fermés. Le module de connexion Mj reçoit donc sur sa borne d'entrée 6e le potentiel du premier fil de commande 6 et la bobine B2 est alimentée; le relais bistable B bascule, le contact b1 s'ouvre, le contact b2 se ferme et le contact b3j s'ouvre. Le contact d'horloge h n'ayant été fermé que pendant un temps très court, la bobine 18 cesse d'être alimentée, le contact 18a se ferme et le contact 18b s'ouvre. Le premier fil de commande 6 n'est plus sous tension et le fil d'alimentation 8 est à nouveau sous tension; la bobine R2 est alimentée, le relais R bascule, les contacts r1 et r4 se ferment et les contacts r2 et r4 s'ouvrent.

Si lorsque le contact d'horloge h se ferme la tension batterie est encore supérieure à la tension de référence, c'est le module de connexion Mj−1 qui recevra le potentiel du premier fil de commande 6 et le fonctionnement décrit pour le module de connexion Mj aura lieu dans le module de connexion Mj−1, ce qui mettra le panneau solaire Sj−1 hors service par ouverture du contact b3j−1 du relais B de ce module de connexion.

Si par contre lorsque le contact d'horloge h se ferme la tension batterie est inférieure à la tension de référence, la bobine 19 est alimentée et le deuxième fil de commande 7 est sous tension; son potentiel est appliqué, à travers les modules de connexion M1, M2, ..., Mj−1, à l'entrée 7e du module de connexion Mj, puisque par hypothèse les panneaux solaires S1, S2, ..., Sj−1 sont en service; par conséquent dans les modules M1 à Mj−1 les contacts r2 et r3 sont fermés et les contacts r1 et r4 sont ouverts. Dans le module de connexion Mj, le contact r3 étant ouvert et le contact r1 fermé le relais B bascule, ce qui permet l'alimentation de la bobine R1 dès que la bobine 18 n'est plus alimentée. Dans le module de connexion Mj on a alors le contact b1 fermé, le contact b2 ouvert, le contact b3j fermé, ce qui met à nouveau le panneau solaire Sj en service, les contacts r2 et r3 fermés et les contacts r1 et r4 ouverts. Ainsi lors de la prochaine fermeture du contact d'horloge h, si la tension batterie est supérieure à la tension de référence, c'est le module de connexion Mj qui recevra le potentiel du premier fil de commande 6, ce qui entraînera par l'ouverture du contact b3j, la mise hors service du panneau solaire Sj; si la tension batterie est inférieure à la tension de référence, c'est le module de connexion Mj+1 qui recevra le potentiel du deuxième fil de commande 7, ce qui entraînera, par la fermeture du contact b3j+1, la mise en service du panneau solaire Sj+1.

Il ressort clairement du fonctionnement du régulateur de charge que les modules de connexion sont commandés par le module de commande 5 par application d'une polarité du convertisseur 2 sur l'un ou l'autre des fils 6 ou 7 qui jouent le rôle de fils de commande pour le fonctionnement des modules de connexion; chaque fil relie les modules de connexion en série, le premier fil de commande 6 étant connecté à une borne d'entrée, 6e, du dernier module de connexion Mn, le deuxième fil de commande 7 étant connecté à une borne d'entrée, 7e, du premier module de connexion M1. Autrement dit les fils de commande 6 et 7 relient les modules de connexion en sens inverse, ce qui permet, par mise sous tension du deuxième fil de commande de mettre en service un ou des panneaux solaires, et par mise sous tension du premier fil de commande de mettre hors service un ou des panneaux solaires, donc de modifier le nombre de panneaux solaires en service en fonction de l'ensoleillement et de l'état de charge de la batterie. L'utilisation d'un module de connexion par panneau solaire permet une grande souplesse et une grande facilité d'emploi. Il est en effet très facile d'ajouter des panneaux solaires; pour cela il suffit d'ajouter des modules de connexion en reliant d'une part la borne de sortie 6s d'un nouveau module de connexion à la borne d'entrée 6e du module de connexion précédent et en reliant le premier fil de commande 6 à la borne d'entrée 6e du dernier module de connexion, et en reliant d'autre part la borne d'entrée 7e d'un nouveau module de connexion à la borne de sortie 7s du module de connexion précédent.

Bien entendu chaque nouveau module de connexion est relié aux fils 8 et 9 par ses bornes d'entrée 8e et 9e, et le contact b3 inséré dans la connexion entre le panneau solaire correspondant et la polarité positive +V de la batterie.

Il est également très facile de supprimer un ou des panneaux solaires; pour cela il suffit de supprimer le ou les modules de connexion correspondants. Si l'on supprime par exemple le panneau solaire Sn, on enlèvera le module de connexion Mn et on reliera le fil 6 à la borne d'entrée 6e du module de connexion Mn−1. Si l'on supprime le panneau solaire Sj, il suffit d'enlever le module de connexion Mj, de relier la borne d'entrée 6e du module de connexion Mj−1 à la borne de sortie 6s du module de connexion Mj+1, et de relier la borne de sortie 7s du module de connexion Mj−1 à la borne d'entrée 7e du module de connexion Mj+1.

Le régulateur de charge de l'invention permet donc de modifier le nombre de sources en service en fonction de l'état de charge de la batterie et de la puissance délivrée par les sources.

L'invention permet également, grâce à la modularité des modules de connexion, de réaliser des régulateurs de charge adaptés à la puissance des installations, donc de chaque batterie, en utilisant le nombre de panneaux solaires nécessaire et le même nombre de modules de connexion qui sont connectés comme indiqué dans la description donnée ci-dessus.

Dans la description de l'exemple de réalisation illustré par les fig. 1 et 2, on a supposé, uniquement à titre d'exemple, que le module de commande 5 et les modules de connexion M1 à Mn comportaient des relais; il est en effet possible de remplacer les contacts des relais par des semi-conducteurs, tels que des transistors ou encore par des thyristors reblocables par commande sur leur gâchette.

De même le contact d'horloge h peut être, comme dans la description un simple contact mécanique, un contact d'un relais, ou un transistor.

**Revendications**

1. Régulateur de charge d'une batterie (1) chargée par des sources identiques (S1 à Sn) de puissance variable, comportant un convertisseur continu-continu (2) alimenté par la batterie (1), un module comparateur (4) qui compare une fraction de la tension de la batterie (1) à une tension de référence élaborée à partir de la tension continue délivrée par le convertisseur (2), caractérisé par le fait qu'il comporte:
— une horloge (3) alimentée par le convertisseur (2) et fermant périodiquement un contact d'horloge (h) pendant un temps court,
— un module de commande (5) relié au convertisseur et comportant un premier dispositif de commande (17) relié au module comparateur (4) et commandant un premier (17a) et un deuxième (17b) moyen d'interruption, un deuxième (18) et un troisième (19) dispositif de commande commandés par le premier (17a) et le deuxième (17b) moyen d'interruption, respectivement, et par le contact d'horloge (h), un premier moyen de coupure (18a, 19a) de chacun des deuxième et troisième dispositifs (18, 19) de commande étant en série et reliant une polarité du convertisseur (2) à un fil d'alimentation (8) sortant du module de commande, un second moyen de coupure (18b) du deuxième dispositif de commande (18) reliant ladite polarité du convertisseur (2) à un premier fil de commande (6) sortant du module de commande (5), et un deuxième moyen de coupure (19b) du troisième dispositif de commande (19) reliant ladite polarité du convertisseur (2) à un deuxième fil de commande (7) sortant du module de commande (5), le module comparateur (4) délivrant un signal assurant, selon son sens et par l'intermédiaire du premier dispositif de commande (17), la commande du deuxième (18) ou du troisième (19) dispositif de commande,

   — des modules de connexion (M1 à Mn), un par source (S1 à Sn), reliés au fil d'alimentation (8), au premier (6) et au deuxième (7) fil de commande, et reliés directement à l'autre polarité du convertisseur (2), chaque fil de commande (6, 7) reliant les modules de connexion en série et en sens inverse, chaque module de connexion (M1 à Mn) comportant un dispositif de commande (B, R) commandant d'une part un moyen de coupure (b31) reliant une des sources (S1 à Sn) à la batterie (1), un module de connexion étant en service lorsque ce moyen de coupure (b31) est fermé, et d'autre part un moyen de coupure (r3, r4) en série avec chaque fil de commande (6, 7), le dispositif de commande (B, R) de chaque module de connexion étant relié directement au fil d'alimentation (8), la polarité du convertisseur (2) à laquelle sont reliés par le module de commande (5) les fils de commande (6, 7) étant transmise par le deuxième fil de commande (7) au dispositif de commande (B, R) du premier module de connexion hors service à travers tous les modules de connexion en service de rang inférieur lorsque le module comparateur (4) détecte une tension de la batterie (1) inférieure à la tension de référence, et par le premier fil de commande (6) au dispositif de commande (B, R) du dernier module de connexion en service à travers tous les modules de connexion hors service de rang supérieur lorsque le module comparateur (4) détecte une tension de la batterie (1) supérieure à la tension de référence.

   2. Régulateur de charge selon la revendication 1, caractérisé par le fait que le premier dispositif de commande (17) du module de commande (5) est une bobine d'un relais et que les premier et deuxième moyens d'interruption sont respectivement un contact à fermeture (17a) et un contact à ouverture (17b) du relais, la bobine étant alimentée par le module comparateur (4) lorsque la tension de la batterie (1) est inférieure à la tension de référence.

   3. Régulateur de charge selon la revendication 1, caractérisé par le fait que les deuxième et troisième dispositifs de commande (18, 19) sont des bobines de relais, et que les premier (18a, 19a) et deuxième (18b, 19b) moyens de coupure de chacun de ces dispositifs de commande (18, 19) sont respectivement un contact à ouverture et un contact à fermeture.

   4. Régulateur de charge selon la revendication 1, caractérisé par le fait que le dispositif de commande (B, R) de chaque module de connexion (M1 à Mn) est constitué d'un premier (B) et d'un deuxième (R) relais bistables ayant chacun une première et une deuxième bobine (B1, B2; R1, R2), le premier relais (B) ayant un premier contact (b1), un deuxième contact (b2) et un troisième contact (b31) constituant le moyen de coupure reliant une des sources (S1 à Sn) à la batterie (1), le deuxième relais (R) ayant un premier (r1), un deuxième (r2), un troisième (r3) et un quatrième (r4) contact, qu'une première entrée (6e) reliée au premier fil de commande (6) et une première sortie (6s) de chaque module de connexion (M1 à Mn) sont reliées par le quatrième contact (r4) du deuxième relais (R), qu'une deuxième entrée (7e) reliée au deuxième fil de commande (7) et une deuxième sortie (7s) de chaque module de connexion (M1 à Mn) sont reliées par le troisième contact (r3) du deuxième relais (R), que la première bobine (B1) du premier relais (B) est connectée d'une part à la deuxième entrée (7e) par le premier contact (r1) du deuxième relais (R) et d'autre part à l'autre polarité du convertisseur (2), que la deuxième bobine (B2) du premier relais (B) est connectée d'une part à la première entrée (6e) par le deuxième contact (r2) du deuxième relais (R) et d'autre part à l'autre polarité du convertisseur (2), que la première (R1) et deuxième (R2) bobine du deuxième relais sont reliées d'une part au fil d'alimentation (8) par un premier (b1) et un deuxième (b2) contact du premier relais (B), respectivement, et d'autre part à l'autre polarité du convertisseur (2), et que l'état hors service d'un module de connexion (M1) correspond aux premier, deuxième et troisième contacts (b1, b2, b31) du premier relais (B) dans les positions respectives d'ouverture, de fermeture et d'ouverture, et aux premier, deuxième, troisième et quatrième contacts (r1, r2, r3, r4) du deuxième relais (R) dans les positions respectives de fermeture, d'ouverture, d'ouverture et de fermeture.

   5. Régulateur de charge selon la revendication 4, caractérisé par le fait que chaque bobine (R1, R2) du deuxième relais (R) est alimentée à travers un circuit résistance condensateur en parallèle (20 à 23), disposé en série avec la bobine.

**Patentansprüche**

   1. Regler für ein Batterieladegerät, wobei die Batterie (1) von identischen Quellen (S1 bis Sn) mit variabler Leistung gespeist wird, mit einem von der Batterie (1) gespeisten Gleichstrom-Gleichstrom-Wandler (2), einem Vergleichermodul (4), der einen Bruchteil der Batteriespannung mit einer ausgehend von der vom Wandler (2) gelieferten Gleichspannung erarbeiteten Bezugsspannung vergleicht, dadurch gekennzeichnet, dass er aufweist

   — einen vom Wandler (2) gespeisten Taktgeber (3), der einen Taktkontakt (h) periodisch während einer kurzen Zeit schliesst,

   — einen Steuermodul (5), der mit dem Wandler verbunden ist und eine erste Steuervorrichtung (17), die mit dem Vergleichermodul (4) verbunden ist und ein erstes (17a) und ein zweites Unterbrechermittel (17b) steuert, eine zweite Steuervorrichtung (18) und eine dritte Steuervorrichtung (19) aufweist, die vom ersten (17a) bzw. zweiten Unterbrechermittel (17b) und vom Taktkontakt (h) gesteuert werden, wobei ein erstes Trennmittel (18a) der zweiten Steuervorrichtung (18) und ein erstes Trennmittel (19a) der dritten Steuervorrichtung (19) miteinander in Reihe geschaltet sind und eine Polarität des Wandlers (2) mit einem vom Steuermodul kommenden Speisedraht (8) verbinden, während ein zweites Trennmittel (18b) der zweiten Steuervorrichtung (18) diese Polarität des Wandlers (2) mit einem ersten vom Steuermodul (5) kommenden Steuerdraht (6) verbindet und ein zweites Trennmittel (19b) der dritten Steuervorrichtung (19) diese Polarität des Wandlers (2) mit einem zweiten vom Steuermodul (5) kommenden Steuerdraht (7) verbindet, wobei das Vergleichermodul (4) ein Signal liefert, das je nach seiner Richtung die zweite (18) oder dritte (19) Steuervorrichtung über die erste Steuervorrichtung (17) steuert,

— Verbindungsmodule (M1 bis Mn), und zwar einer pro Quelle (S1 bis Sn), die mit dem Speisedraht (8), dem ersten (6) und dem zweiten (7) Steuerdraht sowie direkt mit der anderen Polarität des Wandlers (2) verbunden sind, wobei jeder Steuerdraht (6, 7) die Verbindungsmodule in Reihe und in umgekehrter Richtung verbindet, wobei jeder Verbindungsmodul (M1 bis Mn) eine Steuervorrichtung (B, R) aufweist, die einerseits ein Trennmittel (b31), das eine der Quellen (S1 bis Sn) mit der Batterie (1) verbindet, wobei ein Verbindungsmodul in Betrieb ist, wenn dieses Trennmittel (b31) geschlossen ist, und andererseits ein Trennmittel (r3, r4) in Reihe mit jedem Steuerdraht (6, 7) steuert, wobei die Steuervorrichtung (B, R) jedes Verbindungsmoduls direkt mit dem Speisedraht (8) verbunden ist, wobei die Polarität des Wandlers (2), mit der die Steuerdrähte (6, 7) durch den Steuermodul (5) verbunden sind, vom zweiten Steuerdraht (7) zur Steuervorrichtung (B, R) des nicht im Betrieb befindlichen ersten Verbindungsmoduls durch alle im Betrieb befindlichen Verbindungsmodule niedrigeren Rangs übertragen wird, wenn der Vergleichsmodul (4) eine Spannung der Batterie (1) entdeckt, die geringer ist als die Bezugsspannung, während die Polarität des Wandlers (2) vom ersten Steuerdraht (6) zur Steuervorrichtung (B, R) des letzten in Betrieb befindlichen Verbindungsmoduls über alle nicht in Betrieb befindlichen Verbindungsmodule höheren Rangs übertragen wird, wenn der Vergleichsmodul (4) eine Spannung der Batterie (1) entdeckt, die höher ist als die Bezugsspannung.

2. Laderegler nach Anspruch 1, dadurch gekennzeichnet, dass die erste Steuervorrichtung (17) des Steuermoduls (5) eine Wicklung eines Relais ist und dass die ersten und zweiten Unterbrechermittel ein in Ruhestellung offener Kontakt (17a) bzw. ein in Ruhestellung geschlossener Kontakt (17b) des Relais sind, wobei die Wicklung vom Vergleichermodul (4) gespeist wird, wenn die Spannung der Batterie (1) geringer als die Bezugsspannung ist.

3. Laderegler nach Anspruch 1, dadurch gekennzeichnet, dass die zweite Steuervorrichtung und die dritte Steuervorrichtung (18, 19) Relaiswicklungen sind und dass das erste Trennmittel (18a, 19a) bzw. das zweite Trennmittel (18b, 19b) dieser Steuervorrichtungen (18, 19) ein in Ruhestellung geschlossener bzw. ein in Ruhestellung offener Kontakt ist.

4. Laderegler nach Anspruch 1, dadurch gekennzeichnet, dass die Steuervorrichtungen (B, R) der Verbindungsmodule (M1 bis Mn) aus je einem bistabilen Relais bestehen, nämlich einem ersten (B) und einem zweiten (R) bistabilen Relais, die jedes eine erste und eine zweite Wicklung (B1, B2; R1, R2) haben, wobei das erste Relais (B) einen ersten Kontakt (b1), einen zweiten Kontakt (b2) und einen dritten Kontakt (b31) aufweist, die das Trennmittel bilden, das eine der Quellen (S1 bis Sn) mit der Batterie (1) verbindet, wogegen das zweite Relais (R) einen ersten Kontakt (r1), einen zweiten Kontakt (r2), einen dritten Kontakt (r3) und einen vierten Kontakt (r4) hat, dass ein erster mit dem ersten Steuerdraht (6) verbundener Eingang (6e) und ein erster Ausgang (6s) jedes Verbindungsmoduls (M1 bis Mn) durch den vierten Kontakt (r4) des zweiten Relais (R) verbunden sind, dass ein zweiter, mit dem zweiten Steuerdraht verbundener Eingang (7e) und ein zweiter Ausgang (7s) jedes Verbindungsmoduls (M1 bis Mn) über den dritten Kontakt (r3) des zweiten Relais (R) verbunden sind, dass die erste Wicklung (B1) des ersten Relais (B) einerseits an den zweiten Eingang (7e) über den ersten Kontakt (r1) des zweiten Relais (R) und andererseits an die andere Polarität des Wandlers (2) angeschlossen ist, dass die zweite Wicklung (B2) des ersten Relais (B) einerseits an den ersten Eingang (6e) über den zweiten Kontakt (r2) des zweiten Relais (R) und andererseits an die andere Polarität des Wandlers (2) angeschlossen ist, dass die erste Wicklung (R1) und die zweite Wicklung (R2) des zweiten Relais einerseits mit dem Speisedraht (8) über einen ersten Kontakt (b1) bzw. einen zweiten Kontakt (b2) des ersten Relais (B) und andererseits an die andere Polarität des Wandlers (2) angeschlossen sind, und dass der Zustand „ausser Betrieb" eines Verbindungsmoduls (M1) den ersten, zweiten und dritten Kontakten (b1, b2, b31) des ersten Relais (B) in ihren Öffnungs- bzw. Verschluss- bzw. Öffnungsstellungen entspricht, und den ersten, zweiten, dritten und vierten Kontakten (r1, r2, r3, r4) des zweiten Relais (R) in den jeweiligen Stellungen des Verschlusses, der Öffnung, der Öffnung und des Verschlusses.

5. Laderegler nach Anspruch 4, dadurch gekennzeichnet, dass jede Wicklung (R1, R2) des zweiten Relais (R) über einen parallelen RC-Schaltkreis (20 bis 23), der in Reihe mit der Wicklung angeordnet ist, gespeist wird.

## Claims

1. A regulator for a battery (1) charging device, in which the battery is charged by identical sources (S1 to Sn) with a variable force, comprising a direct-direct converter (2) fed by the battery (1), a comparator module (4) which compares a fraction of the battery (1) voltage to a reference voltage derived from the direct voltage delivered by the converter (2), characterized in that it comprises

— a clock (3) fed by the converter (2) and closing periodically a clock contact (h) during a short time,

— a control module (5) connected to the converter and comprising a first control device (17) connected to the comparator module (4) and controlling a first (17a) and a second (17b) interruption means, a second (18) and a third (19) control device controlled by the first (17a) and the second (17b) interruption means respectively and by the clock contact (h), first cut means (18a, 19a) of the second and of the third control devices (18, 19) being in series and connecting a polarity of the converter (2) to a supply wire (8) coming from the control module, a second cut means (18b) of the second control device (18) connecting said polarity of the converter (2) to a first control wire (6) coming from the control module (5), and a second cut means (19b) of the third control device (19) connecting said polarity of the converter (2) to a second control wire (7) coming from the control module (5), the comparator module (4) delivering a signal ensuring, according to its direction and via the first control device (17), the control of the second (18) or the third (19) control device,

— connection modules (M1 to Mn), one for each source (S1 to Sn), connected to the supply wire (8), to the first (6) and to the second (7) control wire, and directly connected to the other polarity of the converter (2), each control wire (6, 7) connecting the connection modules in series and in the opposite direction, each connection module (M1 to Mn) comprising a control device (B, R) controlling on the one hand a cut means (b31) connecting one of the sources (S1 to Sn) to the battery (1), a connection module being active when this cut means (b31) is closed, and on the other hand a cut means (r3, r4) in series with each control wire (6, 7), the control device (B, R) of each connection module being directly connected to the supply wire (8), the polarity of the converter (2) to which the control wires (6, 7) are connected via the control module (5) being transmitted by the second control wire (7) to the control device (B, R) of the inactive first connection module through all the active connection modules of lower rank when the comparator module (4) detects a voltage of the battery (1) which is lower than the reference voltage, and by the first control wire (6) to the control device (B, R) of the last active connection module through all the inactive connection modules of higher rank when the comparator module (4) detects a voltage of the battery (1) which is higher than the reference voltage.

2. A charge regulator according to claim 1, characterized in that the first control device (17) of the control module (5) is a coil of a relay and that the first and second interruption means are respectively a closing contact (17a) and an opening contact (17b) of the relay, the coil being fed by the comparator module (4) when the voltage of the battery (1) is lower than the reference voltage.

3. A charge regulator according to claim 1, characterized in that the second and third control device (18, 19) are relay coils, and that the first (18a, 19a) and second (18b, 19b) cut means of each of these control devices (18, 19) are respectively an opening contact and a closing contact.

4. A charge regulator according to claim 1, characterized in that the control device (B, R) of each connection module (M1 to Mn) is constituted by a first (B) and a second bistable relay (R), each having a first and a second coil (B1, B2; R1, R2), the first relay (B) having a first contact (b1), a second contact (b2) and a third contact (b31) constituting the cut means connecting one of the sources (S1 to Sn) to the battery (1), the second relay (R) having a first (r1), a second (r2), a third (r3) and a fourth (r4) contact, that a first input (6e) connected to the first control wire (6) and a first output (6s) of each connection module (M1 to Mn) are connected through the fourth contact (r4) of the second relay (R), that a second input (7e) connected to the second control wire (7) and a second output (7s) of each connection module (M1 to Mn) are connected through the third contact (r3) of the second relay (R), that the first coil (B1) of the first relay (B) is connected on the one hand to the second input (7e) through the first contact (r1) of the second relay (R) and on the other hand to the other polarity of the converter (2), that the second coil (B2) of the first relay (B) is connected on the one hand to the first input (6e) through the second contact (r2) of the second relay (R) and on the other hand to the other polarity of the converter (2), that the first (R1) and the second coils (R2) of the second relay are connected on the one hand to the supply wire (8) through a first (b1) and second contact (b2) of the first relay (B) respectively, and on the other hand to the other polarity of the converter (2), and that in the state of inactivity of a connection module (M1), the first, second and third contacts (b1, b2, b31) of the first relay (B) are in the respective positions of opening, closing and opening, and the first, second, third and fourth contacts (r1, r2, r3, r4) of the second relay (R) in the respective positions of closing, opening, opening and closing.

5. A charge regulator according to claim 4, characterized in that each coil (R1, R2) of the second relay (R) is fed through a parallel R-C-circuit (20 to 23) disposed in series with the coil.

FIG.1

FIG.2

0 085 947